# EUROPÄISCHE PATENTSCHRIFT

(11) **EP 0 659 942 B1**
(45) Veröffentlichungstag und Bekanntmachung des Hinweises auf die Patenterteilung: **30.10.1996**
(21) Anmeldenummer: 94119706.3
(22) Anmeldetag: 14.12.1994
(51) Int. Cl.: E02D 29/14, B01J 19/02, B65D 90/10, F16J 15/12

(54) **Dichtring für Mannlochstutzen mit Deckel von emaillierten Stahlkesseln**
Sealing ring between a cover and a manhole entrance to an enamelled tank
Anneau d'étanchéité entre un regard et un trou d'homme d'un réservoir émaillé

(30) Priorität: 24.12.1993 DE 4344360
(43) Veröffentlichungstag der Anmeldung: 28.06.1995
(73) Patentinhaber: IDT INDUSTRIE- und DICHTUNGSTECHNIK GmbH, D-45307 Essen (DE)
(72) Erfinder: Winkelmüller,Helmut Dipl.Ing.,, D-51377 Leverkusen (DE); Scheck,Eckhard Dipl.Ing.,, D-51375 Leverkusen (DE); Notter,Wolfgang,Dipl.Ing.,, D-45257 Essen (DE)
(74) Vertreter: Rau, Manfred, Dr. Dipl.-Ing.

(56) Entgegenhaltungen:
- DE-A- 2 830 931
- FR-A- 2 091 631
- US-A- 3 524 662

## Beschreibung

Die Erfindung betrifft einen Dichtring für Mannlochstutzen mit Deckel von emaillierten Stahlkesseln, bestehend aus einer ringförmigen Dichtscheibe aus chemisch beständigem Kunststoff mit in axialer Richtung ausgedehnter, in eingebautem Zustand in den Stutzen hineinragender, ebenfalls aus chemisch beständigem Kunststoff bestehender Schürze.

Die Emaillierungen von emaillierten Reaktions- oder Rührkesseln sind schlag- und stoßempfindlich. Durch Schlag oder Stoß kommt es leicht zum Abplatzen der Emailschicht, wodurch regelmäßig sehr teure Reparaturen oder eine Reemaillierung des gesamten Kessels erforderlich werden. Besonders gefährdet sind insbesondere die Innenflächen von Stutzen, da bei der Manipulation bei geöffnetem Deckel eine Stoß- oder Schlageinwirkung nicht auszuschließen ist.

Aus DE- A - 28 30 931 ist es bekannt, auf der emaillierten Innenfläche von Stutzen entstandene Schäden dadurch zu reparieren, daß man ein aus einem Ring mit axialer Schürze bestehendes Formteil aus Fluorkohlenstoff in den Stutzen einsetzt. Diese Schürze besitzt außen, also auf der der Schadstelle zugewandten Seite, eine Dichtlippe. Der Raum zwischen Stutzenhals, Schürze und der Dichtlippe wird mit aushärtendem Material ausgefüllt. Es handelt sich hierbei also nicht um eine vorbeugende sondern um eine Reparaturmaßnahme. Außerdem ist die Frage einer einwandfreien Abdichtung zwischen Stutzenflansch und Deckel durch den Ring nicht angesprochen.

Es besteht die Aufgabe, einen Dichtring speziell für Mannlochstutzen von emaillierten Kesseln zu schaffen, mit welchem vorbeugend einer Beschädigung der Emaillierung im Stutzenhals entgegengewirkt wird und wobei dieser Dichtring gleichzeitig eine dauerhafte Abdichtwirkung zwischen Stutzenflansch und Deckel gewährleistet.

Diese Aufgabe wird dadurch gelöst, daß an der Oberseite und Unterseite der Dichtscheibe je mindestens eine Nut mit bezüglich der Achse der Dichtscheibe unterschiedlichem Radius vorgesehen ist, in denen ein O-Ring angeordnet ist, und wobei die Dichtscheibe am Außenumfang von einer formstabilisierenden, druckaufnehmenden Bandage umgeben ist.

Dadurch wird erreicht, daß die emaillierte Innenwand des Stutzens durch die abdeckende Schürze gegen Schlag und Stoß geschützt ist Die ringförmige Dichtscheibe aus chemisch beständigem Kunststoff mit integrierten O-Ring-Dichtungen dichtet auch bei geringer Flächenpressung (geringes Volumen oder Drücke) sicher ab und gleicht Unebenheiten der Dichtflächen von Flansch und Deckel aus. Während die Dichtscheibe im wesentlichen eine flüssigkeitsdichte Abdichtung gewährleistet, garantieren die O-Ringe aus gummi-elastischen Material, vorzugsweise FPDM, Gasdichtigkeit. Für die O-Ringe kommen als Material ferner Kunststoff-ummantelte Elastomere, z.B. mit PTFE-oder FEP-Hülle, in Frage. Die um die ringförmige Dichtscheibe gelegte Bandage verhindert insbesondere die Ausbauchung der Dichtscheibe bei geschlossenem Deckel unter dem Schließdruck. Sie dient ferner zur Armierung, damit der Behälterinnendruck nicht zur Zerstörung der ringförmigen Dichtscheibe führt und stellt sicher, daß diese nicht aus ihrem Sitz gedrückt wird. Gemäß einer bevorzugten Ausführungsform sind Dichtscheibe und Schürze durch Nut-und-Feder trennbar miteinander verbunden.

Ist die Schürze beschädigt, läßt sie sich somit bequem austauschen.

Vorzugsweise weisen Oberseite und Unterseite der ringförmigen Dichtscheibe eine zu ihrer Achse konzentrische Kammprofilierung auf, wodurch die Dichwirkung verbessert wird.

Die Bandage besteht vorzugsweise aus einem Edelstahlband, dessen Breite geringer ist als die Dicke der Dichtscheibe, und zwar vorzugsweise 50 bis 75 %.

Gemäß einer weiteren besonderen Ausführungsform ist der Dichtring aus ringförmiger Dichtscheibe und Schürze elektrostatisch ableitend ausgebildet und geerdet.

Dadurch werden elektrostatische Aufladungen und damit gegebenenfalls Funkenentladung vermieden.

Vorzugsweise ist der chemisch beständige Kunststoff ein Polytetrafluorethylen.

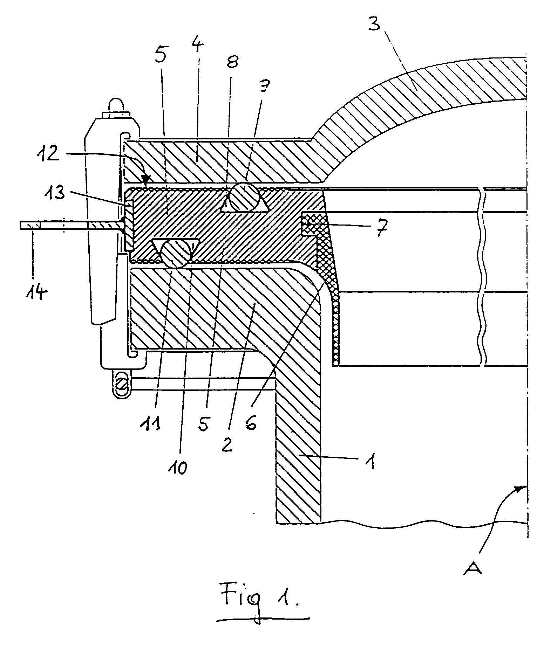

In der Zeichnung ist in Fig. 1 der neue Dichtring, in einem Mannlochstutzen eines Kessels eingebaut, dargestellt und nachstehend näher erläutert:

Fig. 1 zeigt einen Halbschnitt des um die Achse A rotationssymmetrischen Dichtringes. Das Mannloch besteht aus einem Stutzen 1 mit einem Flansch 2 sowie einem Deckel 3 mit Deckelflansch 4, die auf ihrer Innenseite emailliert sind. Der neue Dichtring besteht aus einer ringförmigen Dichtscheibe 5 mit in den Stutzen 1 weisender Schürze 6. Beide bestehen aus PTFE. Dichtscheibe 5 und Schürze 6 sind über eine umlaufende Nut-und-Feder 7 miteinander trennbar verbunden. Ferner weist die Dichtscheibe 5 Nuten 8, 10 auf, in denen O-Ringe 9,11 angeordnet sind. Oberseite und Unterseite der Dichtscheibe 5 sind mit einer zur Achse A konzentrischen Kammprofilierung 12 versehen.

Am äußeren Umfang ist die Dichtscheibe 5 von einer aus einem Edelstahlband bestehenden Bandage 13 mit Befestigungslaschen 14 umschlossen. Die Breite der Bandage 13 beträgt etwa 60 % der Dicke der Dichtscheibe 5.

## Patentansprüche

1. Dichtring für Mannlochstutzen (1) mit Deckel (3) von emaillierten Stahlkesseln, bestehend aus einer ringförmigen Dichtscheibe (5) aus chemisch beständigem Kunststoff mit in axialer Richtung ausgedehnter, in eingebautem Zustand in den Stutzen (1) hineinragender, ebenfalls aus chemisch beständigem Kunststoff bestehender Schürze (6), dadurch gekennzeichnet, daß an der Oberseite und der Unterseite der Dichtscheibe (5) je mindestens eine Nut (8,10) mit bezüglich der Achse der Dichtscheibe (5) unterschiedlichem Radius, vorgesehen ist, in denen ein O-Ring (9, 11) angeordnet ist, und wobei die Dichtscheibe (5) am Außenumfang von einer formstabilisierenden, druckaufnehmenden Bandage (13) umgeben ist.

2. Dichtring nach Anspruch 1, dadurch gekennzeichnet, daß Oberseite und Unterseite der Dichtscheibe (5) eine zu ihrer Achse (A) konzentrische Kammprofilierung (12) aufweisen.

3. Dichtring nach Anspruch 1 oder 2, dadurch gekennzeichnet, daß Dichtscheibe (5) und Schürze (6) durch Nut-und-Feder (7) miteinander verbunden sind.

4. Dichtring nach einem der Ansprüche 1 bis 3, dadurch gekennzeichnet, daß die Bandage (13) aus einem Edelstahlband besteht, dessen Breite geringer ist als die Dicke der Dichtscheibe (5).

5. Dichtring nach einem der Ansprüche 1 bis 4, dadurch gekennzeichnet, daß die Bandage (13) mit Befestigungslaschen (14) versehen ist.

6. Dichtring nach einem der Ansprüche 1 bis 5, dadurch gekennzeichnet, daß der chemisch beständige Kunststoff Polytetrafluorethylen ist.

## Claims

1. Sealing ring between a cover (3) and a manhole entrance (1) to an enamelled tank, comprising a sealing washer (5) of chemically resistant plastics with an apron (6) likewise of chemically resistant platics, which extends in the axial direction and which, in the installed condition, projects into the manhole entrance (1), characterized in that at least one groove (8, 10) of varying radius relative to the axis of the sealing washer (5) is provided on the upper side and the lower side of the sealing washer (5), an O-ring seal (9, 11) being disposed in each groove (8, 10), and the periphery of the sealing washer (5) being encircled by a dimensionally stabilizing, load-carrying binding (13).

2. Sealing ring according to claim 1, characterized in that the upper side and lower side of the sealing washer (5) have a grooved profile (12) concentrical of the axis (A).

3. Sealing ring according to claim 1 or 2, characterized in that the sealing washer (5) and apron (6) are interconnected by a groove and tongue arrangement (7).

4. Sealing ring according to one of claims 1 to 3, characterized in that the binding (13) consists of a strip of special steel, the width of which is less than the thickness of the sealing washer (5).

5. Sealing ring according to one of claims 1 to 4, characterized in that the binding (13) is provided with mounting links (14).

6. Sealing ring according to one of claims 1 to 5, characterized in that the chemically resistant plastic material is polytetrafluorethylene.

## Revendications

1. Anneau d'étanchéité entre une plaque (3) et la bouche d'un trou d'homme (1) d'un réservoir émaillé, composé d'une bague d'étanchéité (5) en matière plastique chimiquement stable avec un tablier (6) également en matière plastique, qui s'étend en sens axial et qui, en état installé, se projète dans la bouche (1), caractérisé en ce qu'au moins une rainure (8, 10) de rayon variable par rapport à l'axe de la bague d'étanchéité (5) est prévue sur la face supérieure et la face inférieure de la bague d'étanchéité (5), un O-ring (9, 11) étant arrangé dans chaque rainure (8, 10) et la circonférnece de la bague d'étanchéité (5) étant entourée d'un bandage (13) stabilisant la forme et absorbant la pression.

2. Anneau d'étanchéité selon la revendication 1, caractérisé en ce que la face supérieure et la face inférieure de la bague d'étanchéité (5) présentent des stries (12) concentriques par rapport à l'axe (A).

3. Anneau d'étanchéité selon la revendication 1 ou 2, caractérisé en ce que la bague d'étanchéité (5) et le tablier (6) sont reliés l'un à l'autre par un assemblage à rainure et languette (7).

4. Anneau d'étanchéité selon l'une quelconque des revendications 1 à 3, caractérisé en ce que le bandage (13) consiste en feuillard en acier spécial dont la largeur est inférieure à l'épaisseur de la bague d'étanchéité (5).

5. Anneau d'étanchéité selon l'une quelconque des revendications 1 à 4, caractérisé en ce que le bandage (13) est pourvu d'éclisses de fixation (14).

6. Anneau d'étanchéité selon l'une quelconque des revendications 1 à 5, caractérisé en ce que la matière plastique chimiquement stable est du polytétrafluoréthylène.
